# EUROPEAN PATENT APPLICATION

(11) **EP 1 302 349 A2**
(43) Date of publication of application: **16.04.2003**
(21) Application number: 02078616.6
(22) Date of filing: 03.09.2002
(51) Int. Cl.: B60J 5/00

(54) **Door wing structure for tarpaulin-covered trucks and similar vehicles**

(30) Priority: 04.10.2001 IT RE20010035 U
(71) Applicant: Pommier Furgocar S.r.l., Roncocesi, 42100 Reggio Emilia (IT)
(72) Inventor: Panciroli, Marco, 42100 Reggio Emilia (IT); Martinelli, Marzio, 42100 Reggio Emilia (IT)
(74) Representative: Corradini, Corrado

(57) **Abstract**

The door wing structure comprises a frame (10), the sides of which are formed from profile bars (11) joined end to end at an angle, and infilling elements for said frame; the structure is characterised in that to join said profile bars (11) together in pairs, angular means (20) are provided which, for joining together the ends of the profile bars (11), are applied to the said profile bars and are secured to these, to generate a large force which urges the end surfaces of the profile bars (11) against each other in a direction substantially perpendicular to these surfaces. The angular mutual joining means (20) comprise two blocks (21, 22) coupled together at an angle and able to be made to approach or withdraw from each other in a direction perpendicular to the end surfaces, and arranged to be each inserted into a respective profile bar (11) and secured thereto, said blocks (21, 22) being made to approach each other by the action of a screw (23) or the like.

## Description

The present invention relates to a door wing structure for tarpaulin-covered trucks (i.e. trucks the load compartment of which is covered by tarpaulins supported by frames) and similar vehicles.

The door wings of these trucks usually each comprise a frame, the sides of which are formed from metal profile bars joined end to end at an angle (by virtue of a 45 degree cut), and infilling means for said frame.

The construction of these door wings poses a considerable technical problem regarding (in addition to the more general one of strength and rigidity of the wing structure) the joining together of the sides of the frame at its corners.

In this respect, the most traditional method, i.e. welding the sides together, requires special structures and equipment, which are not available to all craftsmen who construct such structures. Moreover, serious aesthetic problems arise if the profile bars used for these structures are of anodized aluminium alloy, as is currently mainly the case.

Consequently the sides (profile bars) forming the rectangular frame of each door wing are joined together at the corners by junction elements in the form of an angle plate (right angled bracket), which are applied to the outer surfaces of the corner and are fixed to both profile bars by screws or rivets. Because of their nature, said junction elements are unable to create a joint able to withstand the relatively very high stresses to which the frame is subjected, and hence unable to prevent movement between the abutting surfaces (at 45 degrees) in mutual contact, in particular mutual torsion. They hence serve mainly to maintain the sides of the frame coplanar and joined together during the assembly of the various components of the door wing.

In this respect, this latter, in addition to the frame, possesses infilling elements consisting of mutually associated side-by-side profile elements (or a single profile element) which close the aperture of the frame, to which they are fixed by rivets; in traditional door wings the structural function is performed by these infilling elements, which stiffen the entire door wing and withstand the stresses. However the strength of said connection between the infilling elements and the frame sides which, as stated, has to be made by means of rivets, often proves inadequate because of the dynamic stresses to which the door wing is subjected during vehicle travel, with the result that the entire door wing structure becomes decisively weakened.

In addition to this, this procedure requires special equipment to maintain the frame sides to be joined together in their correct geometrical position during assembly of the door wing. This equipment is relatively complicated and is not available to all those firms which manufacture said structures to the required size for trucks.

An object of the invention is to provide a door wing structure able to overcome said drawbacks.

This and further objects are attained by the invention as characterised in the claims. The invention is based on the fact that to join said profile bars together, it comprises, for joining together the ends, angular means which are fitted into the profile bars themselves and secured to these to generate a large force which urges the end surfaces of the profile bars against each other in a direction substantially perpendicular to these surfaces.

The invention is described in detail hereinafter with the aid of the accompanying figures which illustrate one embodiment thereof by way of non-limiting example.

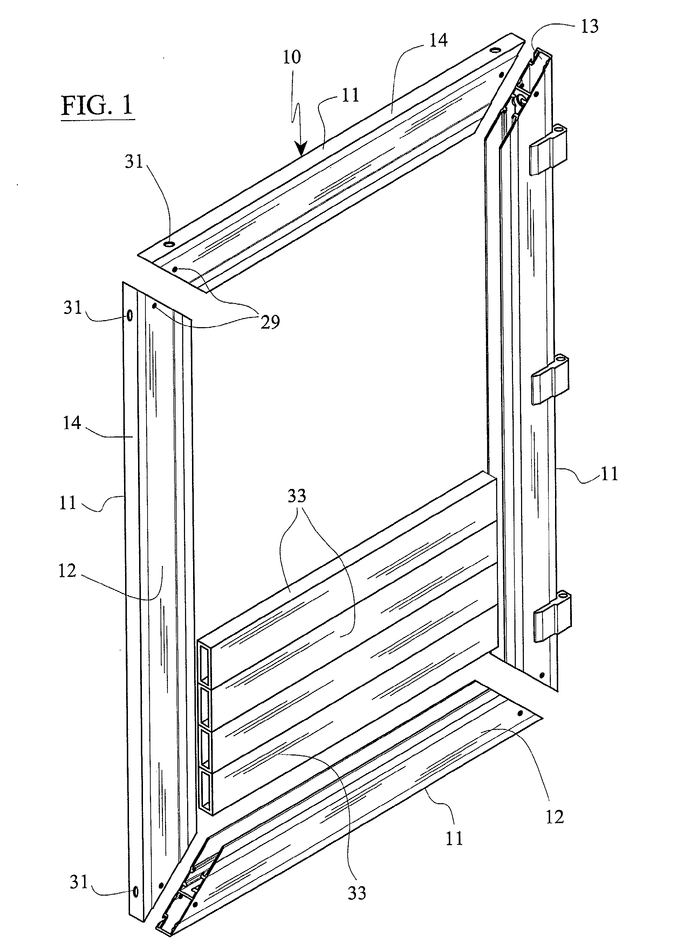

Figure 1 is a perspective exploded view of the door wing according to the invention.

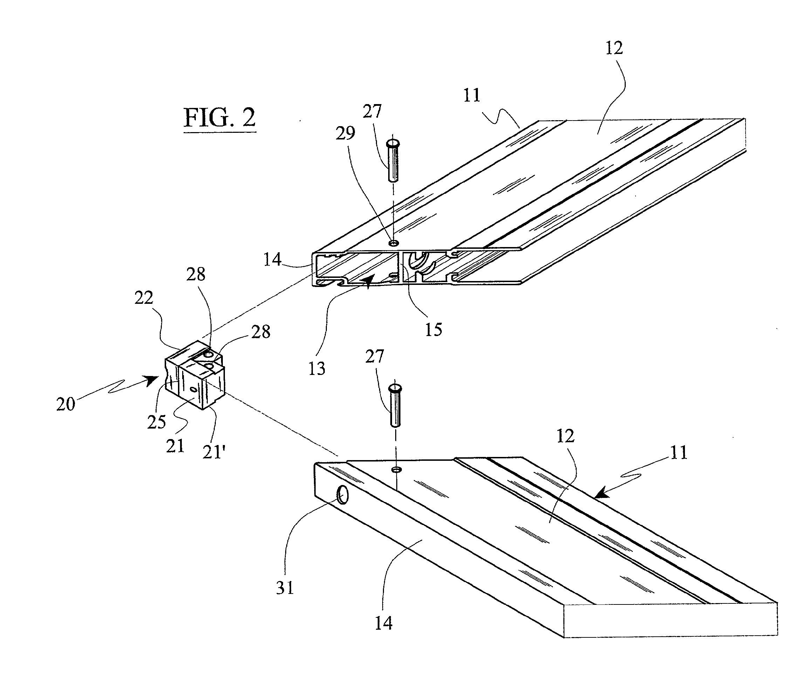

Figure 2 is a perspective view of a corner of the door wing of Figure 1.

Figure 3 is a partly sectional side view of a corner of the door wing of Figure 1.

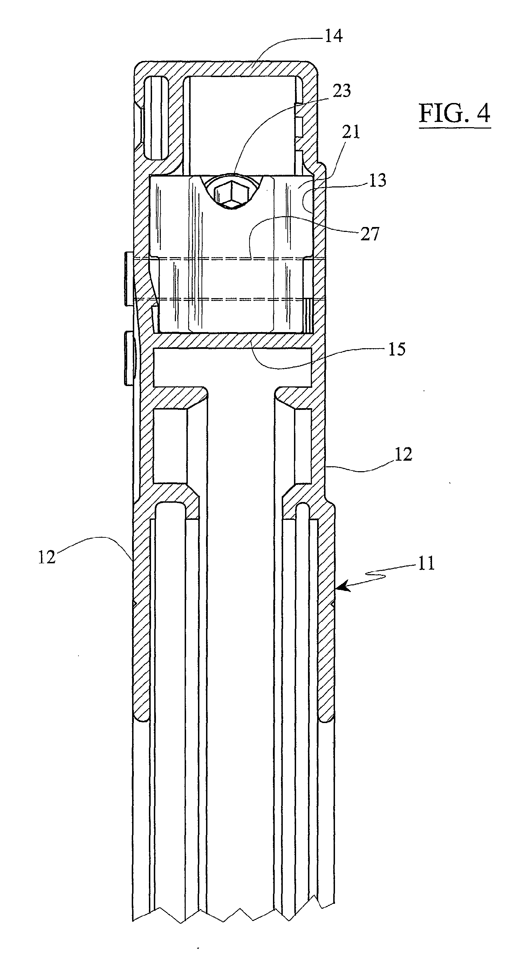

Figure 4 is a section on the plane IV-IV of Figure 3.

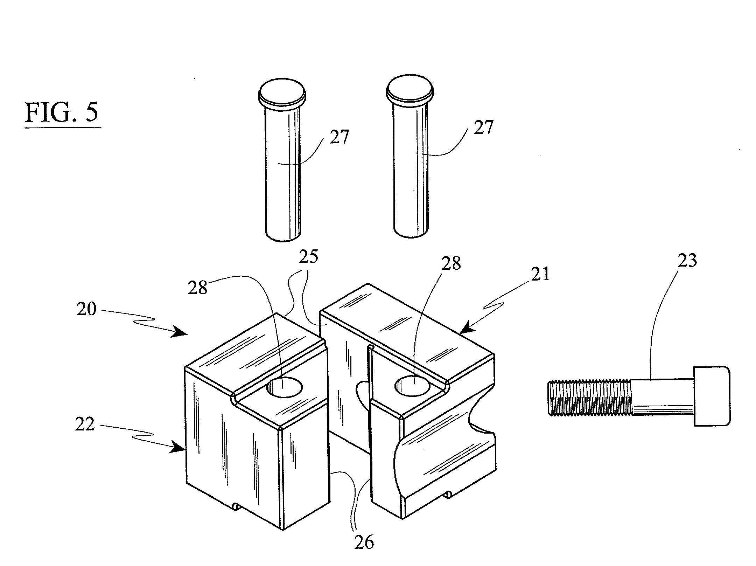

Figure 5 is a perspective view of the angular means for joining together the ends of the profile bars.

The door wing of the invention comprises a rectangular frame 10 having four sides 11, each consisting of a metal profile bar with two major walls 12 parallel to each other and to the overall plane of the frame 10. The external part of the profile bar 11 defines a closed tubular portion 13 formed from a portion of the two major walls 12, an outer transverse wall 14 and an inner transverse wall 15.

The sides 11 are joined angularly together at their ends, after making a 45 degree cut across the ends of each profile bar.

To join the profile bars 11 together and maintain them coplanar, in each corner there is provided an angular means 20 for joining the ends of the profile bars 11 together, this substantially comprising two metal blocks 21 and 22 which can be made to approach each other by the action of a screw 23 (or a similar means), the head of which retains the block 21 and the shank of which retains the other block 22.

Each of the blocks 21 and 22 possesses a prismatic lateral surface which enables them to be inserted in a longitudinal direction, with slight slack, into the tubular portion 13 of the respective profile bars, where a suitable seat is provided to prismatically restrain the block and enable it to undergo movements only in the longitudinal direction.

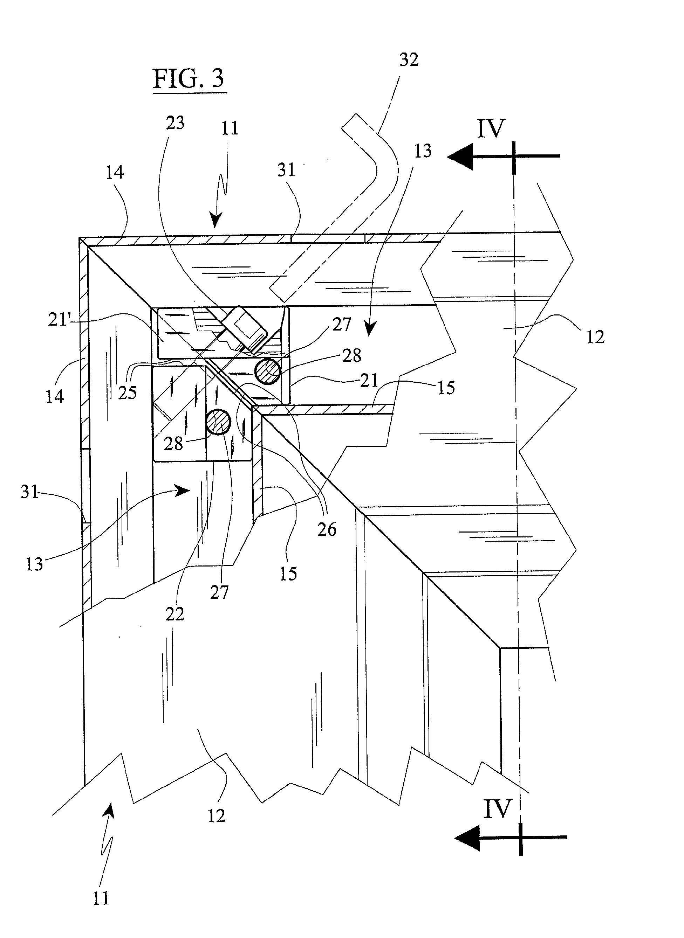

Each block 21, 22 also possesses a surface of contact with the other block, this surface being formed from a first surface portion 25 perpendicular to the longitudinal direction of the profile bar 11 into which the block is inserted, and a second surface portion 26 inclined at 45 degrees to the first surface portion 25. The screw 23 is applied in a direction perpendicular to the second surface portion 26. Preferably, one of the two blocks, the block 21, possesses a portion 21' which projects outwards from the profile bar 11 into which it is inserted, and is inserted as an exact fit into the other profile bar (see Figure 3 in particular).

Each of the two blocks 21 and 22 is fixed to the respective profile bar 11 by a pin 27 which is inserted simultaneously through a transverse hole 28 provided in the block and through respective holes 29 provided in the major walls 12 of the profile bar 11 and aligned with the hole 28.

To assemble the frame 10, two profile bars are placed end to end (to form an angle) while simultaneously inserting into the respective tubular portions 13 the blocks 21 and 22 in their open configuration. The pins 27 are then inserted through the holes 2 and 28 to fix each block 21, 22 to the respective profile bar 11.

Finally, by acting with a key 32 (see Figure 3 in particular) on the head of the screw 23, this is rotated such as to pull the two blocks 21 and 22 together; to enable said key to operate on the screw 23, a hole 31 is formed through the outer transverse wall 14, through which an operator can insert the key to reach the head of the screw 23. By acting on this latter a considerable force can be generated to pull the end surfaces of the profile bars 11 against each other in a direction substantially perpendicular to these surfaces.

It has been surprisingly found that by using said angular means 20, the joint between the profile bars 11 at the corners can be made extremely strong and resistant, to the point that the profile bars 11 remain fixed together without mutual movements occurring, even when subjected to the considerable stresses undergone by the frame 10 under running conditions, if the door is mounted on a tarpaulin-covered truck.

The infilling, in the form of profile bars (or sheets or panels) which is then applied to the interior of the frame 10, can be fixed to this latter by traditional connection means, for example rivets, or even by less resistant means (for example adhesives), these not being subjected to large stresses and hence not posing particular resistance problems, as the stresses are supported virtually completely by the frame 10 alone.

Numerous modifications of a practical and applicational nature can be made to the invention, but without deviating from the scope of the inventive idea as claimed below.

## Claims

1. A door wing structure for tarpaulin-covered trucks and similar vehicles, comprising a frame (10), the sides of which are formed from profile bars (11) joined end to end at an angle, and infilling elements for said frame, **characterised in that** to join said profile bars (11) together in pairs, angular means (20) are provided which, for joining together the ends of the profile bars (11), are applied to the said profile bars and are secured to these, to generate a large force which urges the end surfaces of the profile bars (11) against each other in a direction substantially perpendicular to these surfaces.

2. A door wing structure as claimed in claim 1, **characterised in that** the angular mutual joining means (20) comprise two blocks (21, 22) coupled together at an angle and able to be made to approach or withdraw from each other in a direction perpendicular to the end surfaces, and arranged to be each inserted into a respective profile bar (11) and secured thereto, said blocks (21, 22) being made to approach each other by the action of a screw (23) or the like.

3. A door wing structure as claimed in claim 2, **characterised in that** said blocks (21, 22) each possess a prismatic lateral surface which enables them to be inserted in a longitudinal direction, with slight slack, into the respective profile bars (11), and a surface of mutual contact comprising a first surface portion (25) perpendicular to the longitudinal direction of the side into which the block is inserted, and a second surface portion (26) inclined at 45 degrees to the first surface portion (25), said screw (23) being applied in a direction perpendicular to said second surface portion (26).

4. A door wing structure as claimed in claim 2, **characterised in that** the block (21) possesses a portion (21') which projects outwards from the profile bar (11) into which it is inserted, and is inserted as an exact fit into the other profile bar (11).
